# EUROPEAN PATENT SPECIFICATION

(11) **EP 4 260 679 B1**
(45) Date of publication and mention of the grant of the patent: **01.04.2026**
(21) Application number: 23167494.6
(22) Date of filing: 12.04.2023
(51) Int. Cl.: A01D 34/64, A01D 69/02

(54) **RIDING LAWN MOWER**
AUFSITZRASENMÄHER
TONDEUSE À GAZON AUTOPORTÉE

(30) Priority: 13.04.2022 JP 2022066125; 13.04.2022 JP 2022066126
(43) Date of publication of application: 18.10.2023
(73) Proprietor: Iseki & Co., Ltd., Matsuyama-shi, Ehime 799-2692 (JP)
(72) Inventor: MASUDA, Ryutaro, Ehime, 791-2193 (JP)
(74) Representative: TBK

(56) References cited:
- EP-A2- 1 943 894
- EP-A2- 2 110 295

## Description

### BACKGROUND OF THE INVENTION

### 1. Field of the Invention

The present invention relates to a riding lawn mower equipped with a work machine, which travels in a park or the like to mow planted grass or the like.

### 2. Description of Related Art

From JP 2011 218951 A, a technique has been known in which a pair of left and right electric motors for rear wheels, which drive a pair of left and right rear wheels, are provided on rear portions of a traveling vehicle body of a work vehicle, an electric motor for a work machine, which starts up the work machine, is provided between the electric motor for rear wheels, and a battery that stores electric power to be supplied to the electric motor for rear wheels or the electric motor for a work machine is provided on a front portion of the traveling vehicle body of the work vehicle. However, JP 2011 218951 A does not disclose the location where a controller that performs steering control or the like of the work vehicle or an inverter that drives the electric motor for a work machine is disposed, and depending on the disposition, it may not be able to secure space or noise interference may occur.

EP 2 110 295 A2 discloses a riding lawn mower as specified in the preamble of claim 1. EP 1 943 894 A2 discloses a riding lawn mower with a battery on the bottom side of a main frame, a controller that includes an inverter, and a CPU that is centralized at a position on the lower side of a seat.

### SUMMARY OF THE INVENTION

An object of the invention is to provide a riding lawn mower in which an electrical component and a battery of the riding lawn mower are efficiently disposed.

The invention that achieves the foregoing object is as specified in claim 1.

According to the invention, the inverter device, the controller, the first battery and the second battery can be efficiently disposed.

In an embodiment of the invention, a large space is formed behind the electrical box that houses the inverter device, and the upper wall of the chute is provided in the space, the upper wall being formed to be inclined upward to the rear, so that the vertical cross-sectional area in a left-right direction of the chute can be formed to be large, and clogging of the mowed grass inside the chute can be suppressed.

In addition, the controller is provided at a position away from the inverter device, so that the controller can be prevented from malfunctioning due to noise such as electromagnetic waves generated by the inverter device.

In addition, damage to the first battery and the second battery caused by vibrations of the traveling vehicle body can be suppressed.

### BRIEF DESCRIPTION OF THE DRAWINGS

FIG. 1 is a left side view of a work vehicle in the form of a riding lawn mower;
FIG. 2 is a left side view of the work vehicle with a bonnet cover in an open posture;
FIG. 3 is a partially cutaway perspective view of main parts of the work vehicle;
FIG. 4 is a rear view of the work vehicle;
FIG. 5 is a plan view of rear wheels and main parts of a work machine;
FIG. 6 is a left side view of the rear wheel and main parts of the work machine;
FIG. 7 is a left side view of an electric motor for rear wheels and an electric motor for the work machine;
FIG. 8 is a perspective view of a traveling vehicle body;
FIG. 9 is a perspective view of a steering post;
FIG. 10 is a perspective view of batteries and the steering post;
FIG. 11 is a plan view of the work vehicle with the bonnet cover and an operator's seat removed;
FIG. 12 is a perspective view of the battery and a battery bracket;
FIG. 13 is a perspective view of the battery bracket;
FIG. 14 is a front view of front wheels, the battery, and the battery bracket;
FIG. 15 is a perspective view of a protective frame;
FIG. 16 is a perspective view of an electrical component;
FIG. 17 is a left side view of the electrical component;
FIG. 18 is a perspective view of a housing with a lid portion removed;
FIG. 19 is a plan view of the housing with the lid portion removed;
FIG. 20 is a vertical cross-sectional view of a body portion taken along a front-rear direction;
FIG. 21 is a perspective view of an electrical box and the electric motors; and
FIG. 22 is a right side view of a controller for a work vehicle, which is provided in a bonnet portion.

### DESCRIPTION OF EMBODIMENTS

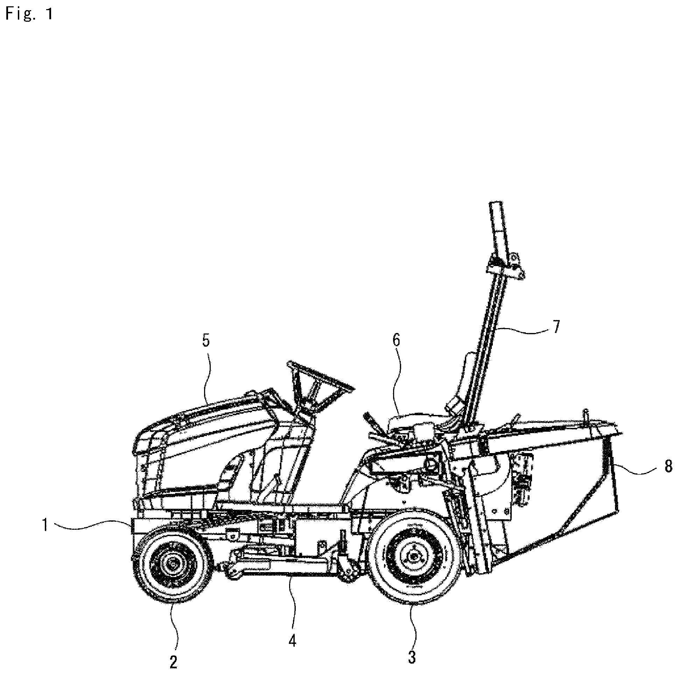

As shown in FIG. 1, a pair of left and right front wheels 2 are provided on a front portion of a traveling vehicle body 1 of a work vehicle in the form of a riding lawn mower, a pair of left and right rear wheels 3 are provided on a rear portion of the traveling vehicle body 1, and a work machine 4 that mows grass or the like is provided between the front wheels 2 and the rear wheels 3 on a lower side of the traveling vehicle body 1. In addition, a bonnet portion 5 is provided at an upper front portion of the traveling vehicle body 1, an operation portion 6 on which a worker gets is provided behind the bonnet portion 5, a safety frame (ROPS) 7 that protects the worker is provided on a rear side of the operation portion 6, and a grass collection container 8 that stores grass or the like mowed by the work machine 4 is provided below the safety frame 7.

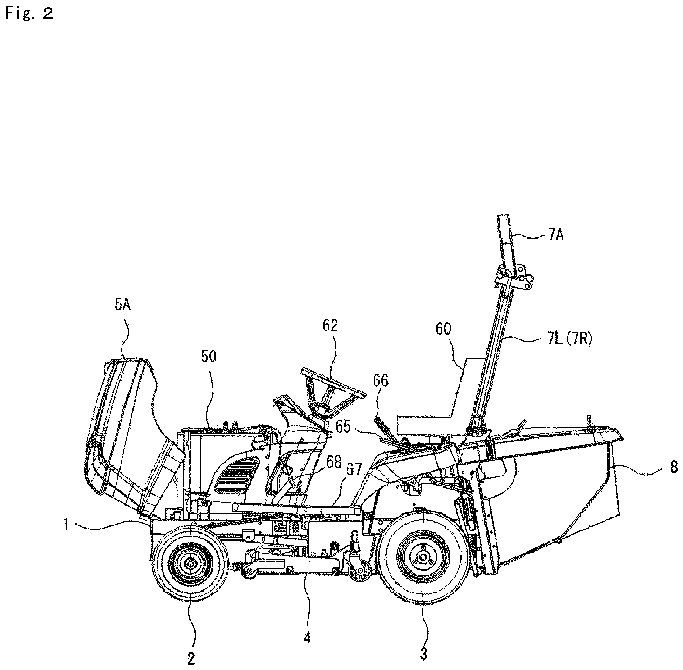

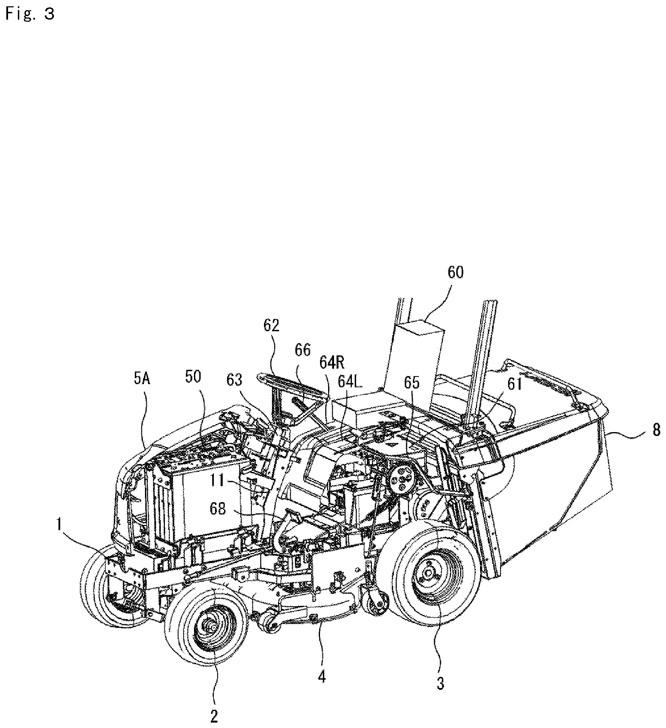

As shown in FIGS. 2 and 3, a battery 50, which stores electric power to be supplied to an electric motor 30 that drives the rear wheels 3 and to an electric motor 40 that drives the work machine 4, are provided in the bonnet portion 5, and the battery 50 is covered by a bonnet cover 5A. Incidentally, the bonnet cover 5A is supported by a support shaft (not shown) extending in a left-right direction and provided on a front portion of the traveling vehicle body 1. Accordingly, a space formed in the bonnet portion 5 can be effectively utilized, and a difference in weight balance in the front-rear direction of the work vehicle can be suppressed.

An operator's seat 60 is provided at a rear portion of the operation portion 6, and a steering wheel 62 is provided in front of the operator's seat 60. The steering wheel 62 is supported on an upper portion of a steering shaft 63 extending in an up-down direction, and the steering shaft 63 is supported by a steering post 11.

A brake pedal 68 is provided on a left side of the steering post 11 on a floor 67 of the operation portion 6, and an accelerator pedal 69 for forward and backward travel is provided on a right side.

An electrical component 61 is provided below the operator's seat 60 of the operation portion 6. Accordingly, a space formed below the operator's seat 60 can be effectively utilized.

The safety frame 7 includes a left pillar portion 7L extending in the up-down direction; a right pillar portion 7R extending in the up-down direction; and a connecting portion 7A having an inverted U shape and connecting upper portions of the left pillar portion 7L and the right pillar portion 7R.

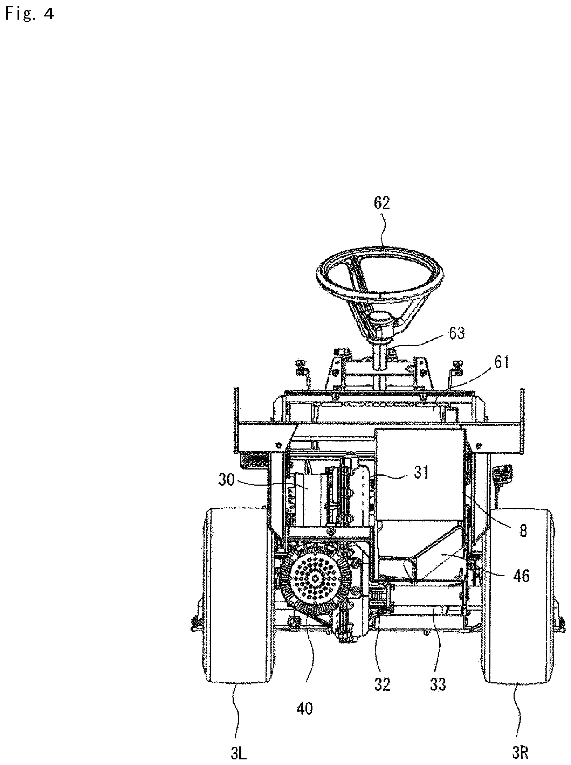

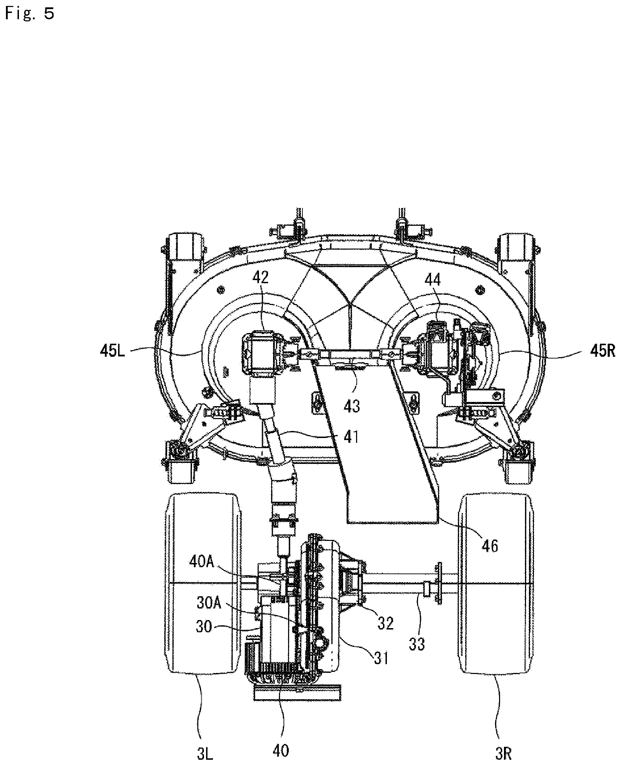

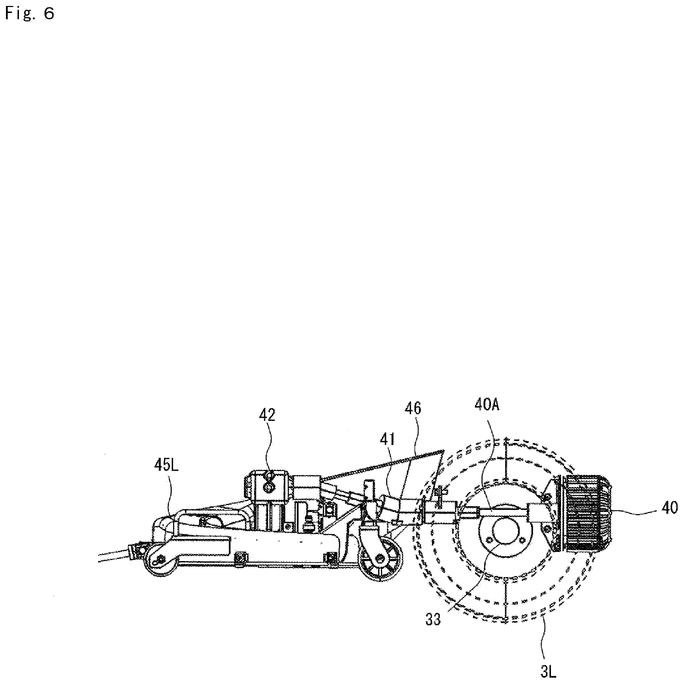

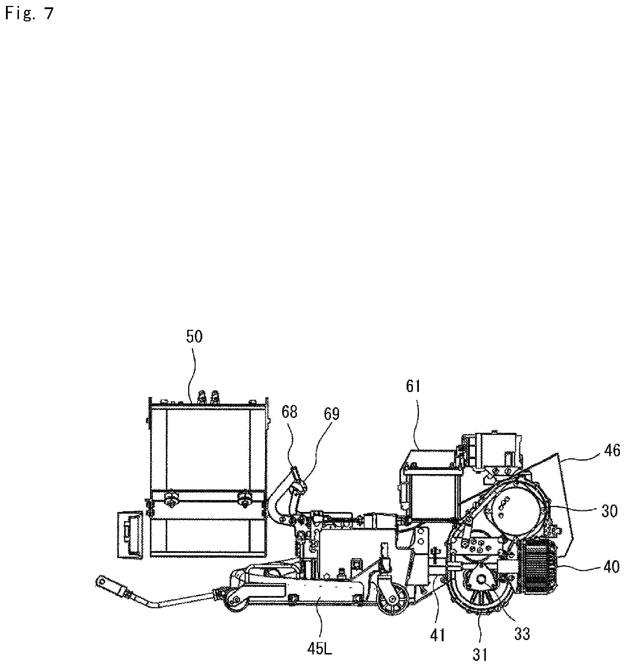

As shown in FIGS. 4 to 7, the electric motor 30 such as a synchronous motor or an induction motor operated by a 3-way AC voltage waveform that drives the rear wheels 3 is provided below the electrical component 61. An output shaft 30A of the electric motor 30, which is formed to extend in the left-right direction, is connected to an upper portion of a gearbox 31 that reduces an output rotation transmitted from the output shaft 30A to increase output torque or reverse the rotation direction. Incidentally, the electric motor 30 is provided at a position offset to a left rear wheel 3L from the center in the left-right direction.

The output rotation increased or reduced by the gearbox 31 is transmitted to a drive shaft 33 extending in the left-right direction, via a differential gear 32 provided below the gearbox 31 and formed of differential gears and the like. The output rotation transmitted to the drive shaft 33 is transmitted to the left rear wheel 3L and a right rear wheel 3R supported on both end portions of the drive shaft 33.

The electric motor 40 such as a synchronous motor or an induction motor operated by a 3-way AC voltage waveform that drives the work machine 4 is provided below the electric motor 30. An output shaft 40A of the electric motor 40, which is formed to extend in the front-rear direction, is connected to a rear portion of a universal joint 41 provided to extend in the front-rear direction. In addition, the output shaft 40A is provided orthogonal to the drive shaft 33 above the drive shaft 33. Accordingly, a space formed below the electric motor 30 can be effectively utilized. In addition, since a transmission path between the electric motor 40 and the work machine 4 can be shortened, the output rotation of the electric motor 40 can be efficiently transmitted to the work machine 4. Incidentally, the electric motor 40 is provided at a position offset to the left rear wheel 3L from the center in the left-right direction.

A front portion of the universal joint 41 is connected to a gearbox 42 that reduces an output rotation transmitted from the universal joint 41 to increase output torque. The output rotation transmitted to the gearbox 42 is transmitted to a left mowing blade (not shown) provided in a left discharge passage 45L of the work machine 4, via an output shaft of the gearbox 42, the output shaft being formed to extend in the up-down direction.

A connecting member 43 extending in the left-right direction is connected to a right portion of the gearbox 42, and a right portion of the connecting member 43 is connected to a gearbox 44. The output rotation transmitted to the gearbox 44 is transmitted to a right mowing blade (not shown) provided in a right discharge passage 45R of the work machine 4, via an output shaft of the gearbox 44, the output shaft being formed to extend in the up-down direction. Incidentally, the rotation speeds of the output rotation of the output shaft of the gearbox 42 and of the output rotation of the output shaft of the gearbox 44 are the same, and the rotation directions are opposite, namely, in a plan view, the output shaft of the gearbox 42 rotates in a clockwise direction, and the output shaft of the gearbox 44 rotates in a counterclockwise direction.

Carry-out ports of the left discharge passage 45L and the right discharge passage 45R are connected to a carry-in port of a chute 46 that conveys mowed grass or the like to the grass collection container 8. A carry-out port of the chute 46 is connected to a carry-in port of the grass collection container 8.

In a plan view, a front portion of the chute 46 is provided on a right side of the universal joint 41, and a rear portion of the chute 46 is provided on a right side of the gearbox 31, and in a rear view, the chute 46 and the grass collection container 8 are provided between the gearbox 31 and the right rear wheel 3R. Accordingly, the large chute 46 can be provided in a space formed on a right side of the universal joint 41 and the gearbox 31, and grass or the like mowed by the work machine 4 can be efficiently conveyed to the grass collection container 8.

In a side view, an upper wall of the chute 46 is formed to be inclined upward to the rear, and the rear portion of the chute 46 is provided to extend downward below the electrical component 61 Accordingly, the rear portion of the chute 46 is enlarged, so that clogging of grass or the like inside the chute 46 can be prevented.

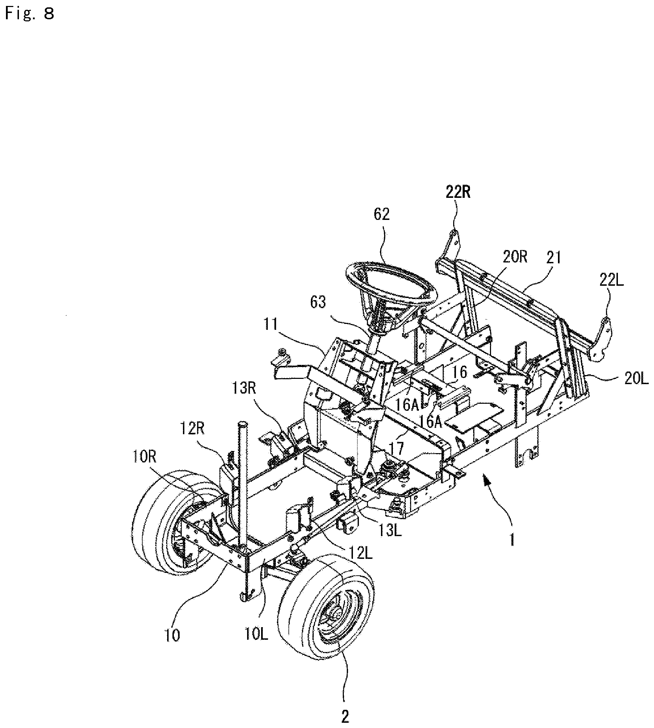

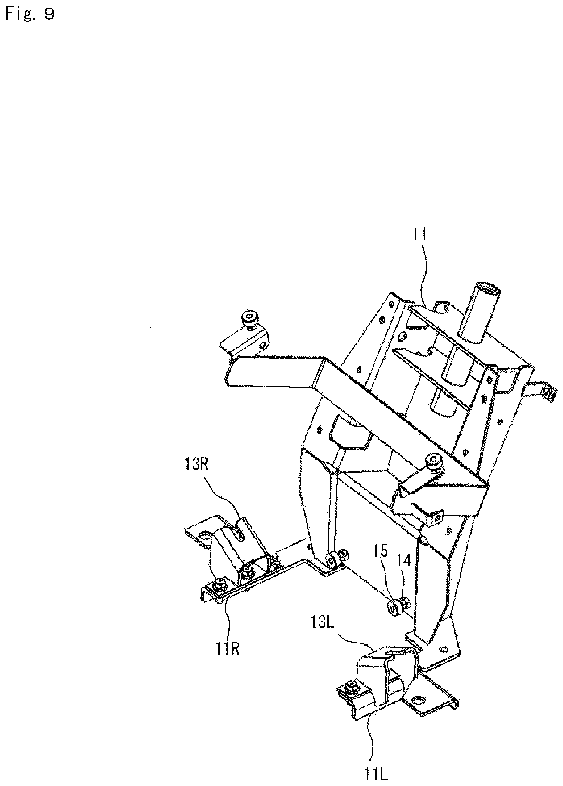

As shown in FIGS. 8 and 9, the traveling vehicle body 1 includes a traveling vehicle main body 10 supporting the front wheels 2 and the rear wheels 3, and the steering post 11 supporting the steering shaft 63.

A left front-rear frame 10L and a right front-rear frame 10R extending in the front-rear direction are formed in the traveling vehicle main body 10, and a left connecting portion 11L and a right connecting portion 11R extending forward are formed at a lower portion of the steering post 11.

The left connecting portion 11L is fixed to the left front-rear frame 10L by a fastener such as a bolt and the right connecting portion 11R is fixed to the right front-rear frame 10R by a fastener such as a bolt, thereby being integrated to form the traveling vehicle body 1.

A left support member 12L is provided on a front portion of the left front-rear frame 10L, and a connecting portion of the left support member 12L is formed to be inclined upward to the left. In addition, a right support member 12R is provided on a front portion of the right front-rear frame 10R, and a connecting portion of the right support member 12R is formed to be inclined upward to the right. Incidentally, the left support member 12L and the right support member 12R are made of channel steel.

A left support member 13L is provided on a front portion of the left connecting portion 11L, and a connecting portion of the left support member 13L is formed to be inclined upward to the left. In addition, a right support member 13R is provided on a front portion of the right connecting portion 11R, and a connecting portion of the right support member 13R is formed to be inclined upward to the right. Incidentally, the left support member 13L and the right support member 13R are made of channel steel.

Protrusion portions 14 protruding forward are formed on a lower portion of the steering post 11 at a predetermined interval in the left-right direction, and cushioning members 15 formed of rubber members or the like are provided at tips of the protrusion portions 14.

A left up-down frame 20L extending upward is provided on a rear portion of the left front-rear frame 10L, a right up-down frame 20R extending upward is provided on a rear portion of the right front-rear frame 10R, and upper portions of the left up-down frame 20L and the right up-down frame 20R are connected to a left-right frame 21 extending in the left-right direction.

A left connecting portion 22L supporting a lower portion of the left pillar portion 7L of the safety frame 7 is provided on a left portion of the left-right frame 21, and a right connecting portion 22R supporting a lower portion of the right pillar portion 7R of the safety frame 7 is provided on a right portion of the left-right frame 21.

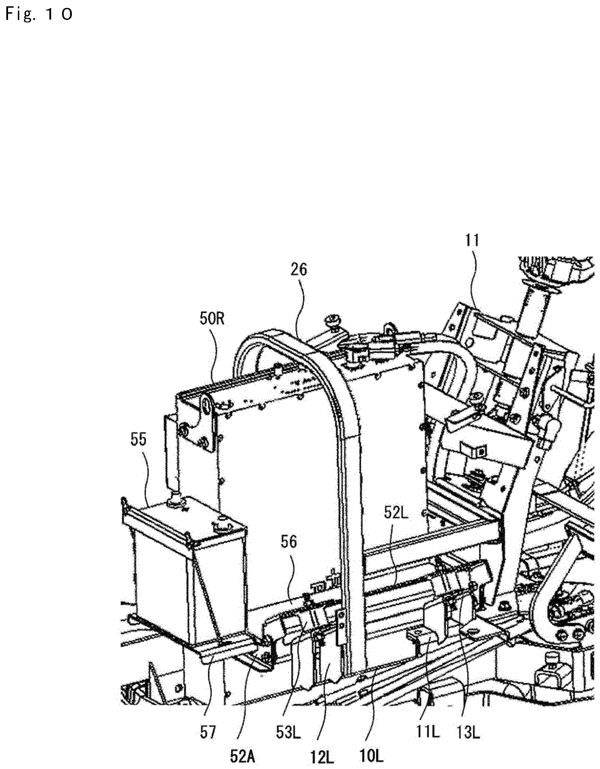

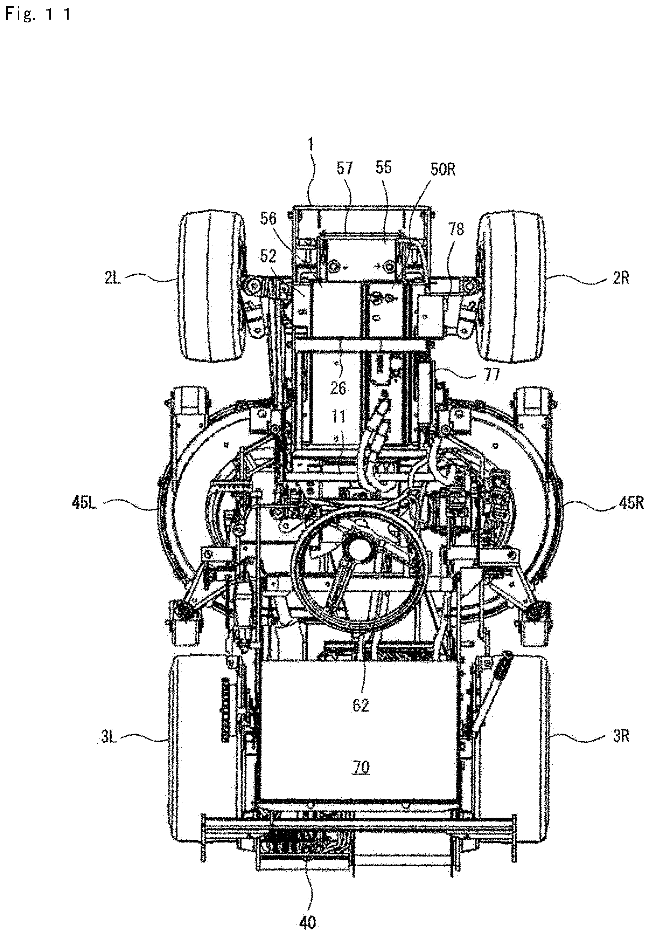

As shown in FIGS. 10 and 11, the bonnet portion 5 is provided with the battery 50 that stores electric power to be supplied to the electric motor 30 that drives the rear wheels 3 and to the electric motor 40 that drives the work machine 4, and a battery 55 that stores electric power to be supplied to a controller 77 for a work vehicle, which controls electronic devices installed on the traveling vehicle body 1. The controller 77 controls all the electronic devices of the work vehicle, such as outputting a signal for controlling the electric motor 30 via an inverter device 81 in response to an operation input of the accelerator pedal 69 or outputting a signal for controlling the electric motor 40 via an inverter device 82 in response to an operation input of a gearshift lever 47. Incidentally, in the present embodiment, the battery 50 is formed of a lithium-ion battery with high energy density, and the battery 55 is formed of a lead battery. Incidentally, FIGS. 10 and 11 show a mode where a right battery 50R forming the battery 50 is provided and, instead of a left battery 50L, a spacer 56 is provided on a left side of the right battery 50R.

The spacer 56 and the right battery 50R are fixed to the traveling vehicle main body 10 and the steering post 11 via a battery bracket 52. The battery 55 is provided on an upper surface of a support member 57 provided to extend forward from a front surface of a front left-right frame 52A of the battery bracket 52. Accordingly, the maintenance and inspection work of the battery 50 and the battery 55 can be efficiently performed, and rainwater can be prevented from getting on the battery 50 and the battery 55.

A protective frame 25 extending along an outer peripheral portion of the spacer 56 and the right battery 50R is provided at an intermediate portion in the front-rear direction of the spacer 56 and the right battery 50R. Accordingly, the battery 50 can be prevented from being damaged in the event of overturning of the work vehicle.

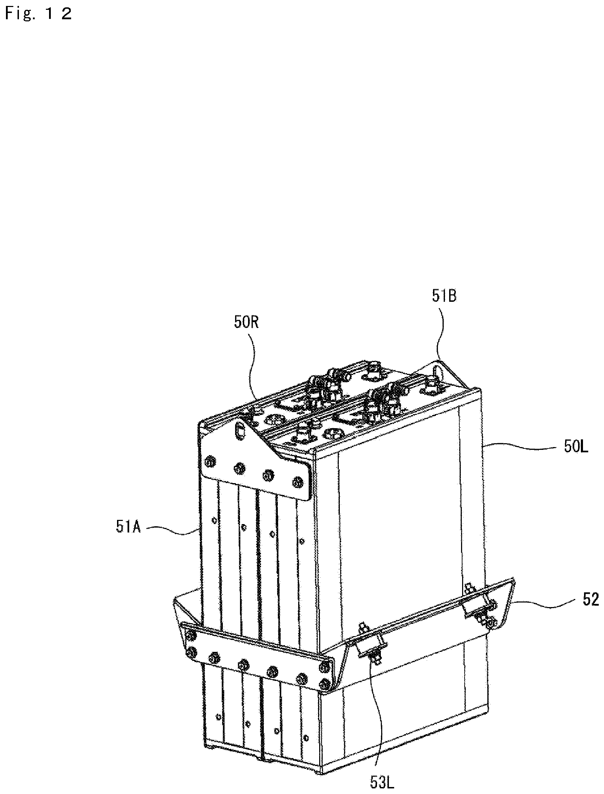

As shown in FIG. 12, the battery 50 provided in the bonnet portion 5 includes the left battery 50L provided on the left side, and the right battery 50R provided on the right side. The left battery 50L and the right battery 50R are formed by connecting a plurality lithium-ion batteries with high energy density in series and parallel, and are formed in the same shape with the same capacity. Accordingly, by providing the left battery 50L and the right battery 50R in the bonnet portion 5, and connecting the left battery 50L and the right battery 50R in parallel, the work vehicle is allowed to travel for a long period of time and to mow grass or the like in a wide park. In addition, when grass or the like in a narrow park is mowed, one of the left battery 50L and the right battery 50R in the bonnet portion 5 can be removed and used as a replacement battery.

When the left battery 50L and the right battery 50R are connected in parallel and used, upper portions of front surfaces of the left battery 50L and the right battery 50R are connected by a front connecting plate 51A, and upper portion of rear surfaces of the left battery 50L and the right battery 50R are connected by a rear connecting plate 51B. Accordingly, the upper portions of the left battery 50L and the right battery 50R are firmly connected via the front connecting plate 51A and the rear connecting plate 51B, so that the breakage of cables or the like connecting terminals of the left battery 50L and the right battery 50R can be prevented. In addition, lower portions of the left battery 50L and the right battery 50R are internally fitted to an inner peripheral portion of the battery bracket 52. Accordingly, a space formed in the bonnet portion 5 can be effectively utilized.

As shown in FIGS. 10 and 11, when the left battery 50L is removed and the only the right battery 50R is used, the spacer 56 formed in the same shape as the left battery 50L in a plan view and formed with the same weight as the left battery 50L is provided on the left side of the right battery 50R. Accordingly, a large movement of the center of gravity of the work vehicle is suppressed, so that a sense of discomfort occurring during operation can be prevented.

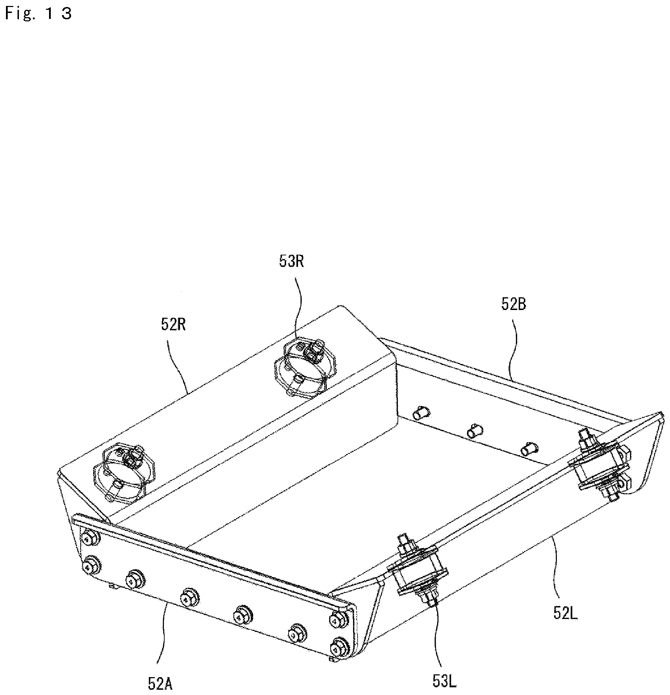

As shown in FIG. 13, the battery bracket 52 is formed of a left front-rear frame 52L and a right front-rear frame 52R extending in the front-rear direction; the front left-right frame 52A connecting front portions of the left front-rear frame 52L and the right front-rear frame 52R; and a rear left-right frame 52B connecting rear portions of the left front-rear frame 52L and the right front-rear frame 52R. Incidentally, the left front-rear frame 52L and the right front-rear frame 52R are made of angle steel, and the front left-right frame 52A and the rear left-right frame 52B are made of channel steel.

A connecting portion of the left front-rear frame 52L is formed to be inclined upward to the left, and a connecting portion of the right front-rear frame 52R is formed to be inclined upward to the right. Incidentally, in a rear view, the connecting portion of the left support member 13L, the connecting portion of the left support member 12L, and the connecting portion of the left front-rear frame 52L are formed to be inclined upward to the left at the same inclination angle, and the connecting portion of the right support member 13R, the connecting portion of the right support member 12R, and the connecting portion of the right front-rear frame 52R are formed to be inclined upward to the right at the same inclination angle.

Left anti-vibration members 53L having a round shape are provided on a lower surface of the connecting portion of the left front-rear frame 52L at a predetermined interval in the front-rear direction, and right anti-vibration members 53R having a round shape are formed on a lower surface of the connecting portion of the right front-rear frame 52R at a predetermined interval in the front-rear direction.

The left front-rear frame 52L is connected to the left support member 12L of the left front-rear frame 10L and to the left support member 13L of the left connecting portion 11L via the left anti-vibration members 53L, and the right front-rear frame 52R is connected to the right support member 12R of the right front-rear frame 10R and to the right support member 13R of the right connecting portion 11R via the right anti-vibration members 53R. Accordingly, the transmission of vibrations of the traveling vehicle main body 10 to the battery 50 is suppressed, the vibrations being generated during traveling of the work vehicle, so that damage or the like to the battery 50 can be prevented.

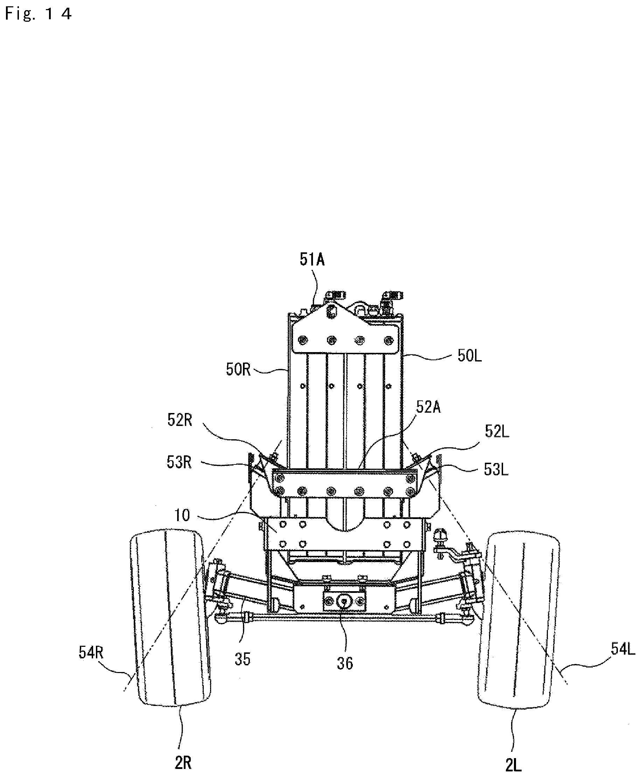

As shown in FIG. 14, the connecting portion of the left front-rear frame 52L is provided such that a left-upward inclined surface is orthogonal to a left imaginary line 54L connecting the center between the left anti-vibration members 53L and the center of a left front wheel 2L on the left side. In addition, the connecting portion of the right front-rear frame 52R is provided such that a right-upward inclined surface is orthogonal to a right imaginary line 54R connecting between the center of the right anti-vibration members 53R and the center of a right front wheel 2R on the right side. Accordingly, large vibrations caused by irregularities of a traveling surface via the front wheels 2 and the rear wheels 3 are suppressed, so that damage or the like to the battery 50 can be prevented. Incidentally, reference sign 35 denotes a front wheel support frame supporting the left and right front wheels 2, and reference sign 36 is a connecting portion between the front wheel support frame and the traveling vehicle main body 10, and denotes an oscillating shaft of the front wheel support frame.

In addition, tip portions of the cushioning members 15 of the steering post 11 are pressed against a rear surface of the rear left-right frame 52B of the battery bracket 52. Accordingly, the rearward movement of the battery 50 during launch of the work vehicle is suppressed, so that damage or the like to the battery 50 can be prevented.

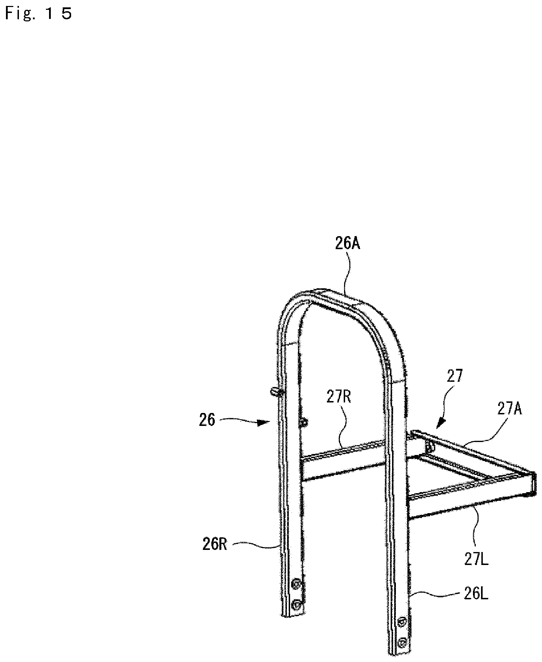

As shown in FIG. 15, the protective frame 25 includes an up-down protective frame 26 extending in the up-down direction, and a front-rear protective frame 27 extending rearward from an intermediate portion in the up-down direction of the up-down protective frame 26.

The up-down protective frame 26 includes a left up-down frame 26L extending upward from the left front-rear frame 10L; a right up-down frame 26R extending upward from the right front-rear frame 10R; and a connecting portion 26A having an inverted U shape and connecting upper portions of the left up-down frame 26L and the right up-down frame 26R.

The left up-down frame 26L is provided on a left side of a left surface of the left battery 50L, the right up-down frame 26R is provided on a right side of a right surface of the right battery 50R, and the connecting portion 26A is provided on an upper side of upper surfaces of the left battery 50L and the right battery 50R. In addition, the left up-down frame 26L, the right up-down frame 26R, and the connecting portion 26A are made of square pipes.

The front-rear protective frame 27 includes a left front-rear frame 27L extending rearward from an intermediate portion in the up-down direction of the left up-down frame 26L; a right front-rear frame 27R extending rearward from an intermediate portion in the up-down direction of the right up-down frame 26R; and a connecting portion 27A extending in the left-right direction and connecting rear portions of the left front-rear frame 27L and the right front-rear frame 27R. The connecting portion 27A is detachably fixed to a lower portion of the steering post 11 by a fastener such as bolt. Accordingly, the rigidity of the protective frame 25 is increased and the deformation of the protective frame 25 in the event of overturning of the work vehicle is suppressed, so that the battery 50 can be further prevented from being damaged. Incidentally, in the present embodiment, the front-rear protective frame 27 is fixed to the lower portion of the steering post 11 via the connecting portion 27A; however, the rear portions of the left front-rear frame 27L and the right front-rear frame 27R can also be fixed to the lower portion of the steering post 11 without providing the connecting portion 27A.

The left front-rear frame 27L is provided on the left side of the left surface of the left battery 50L, the right front-rear frame 27R is provided on the right side of the right surface of the right battery 50R, and the connecting portion 27A is provided on a rear side of the rear surfaces of the left battery 50L and the right battery 50R. In addition, the left front-rear frame 27L and the right front-rear frame 27R are made of square pipes, and the connecting portion 27A is made of channel steel.

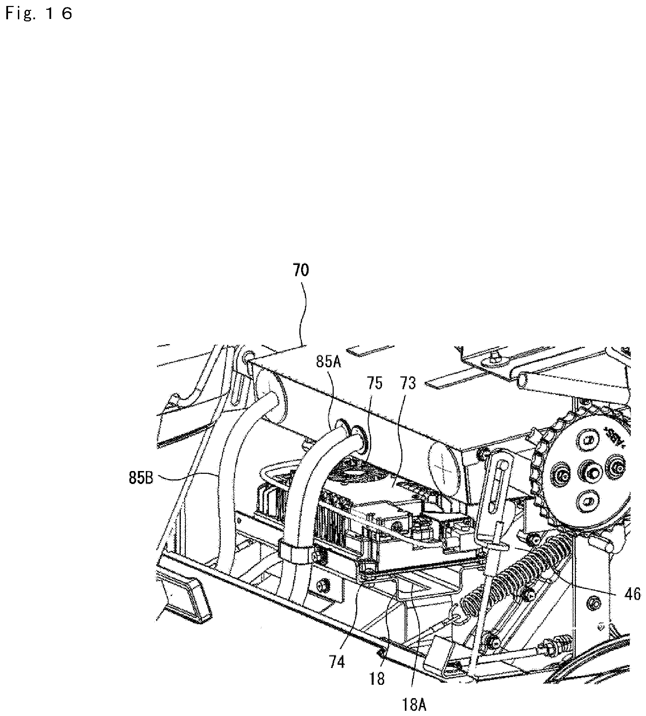

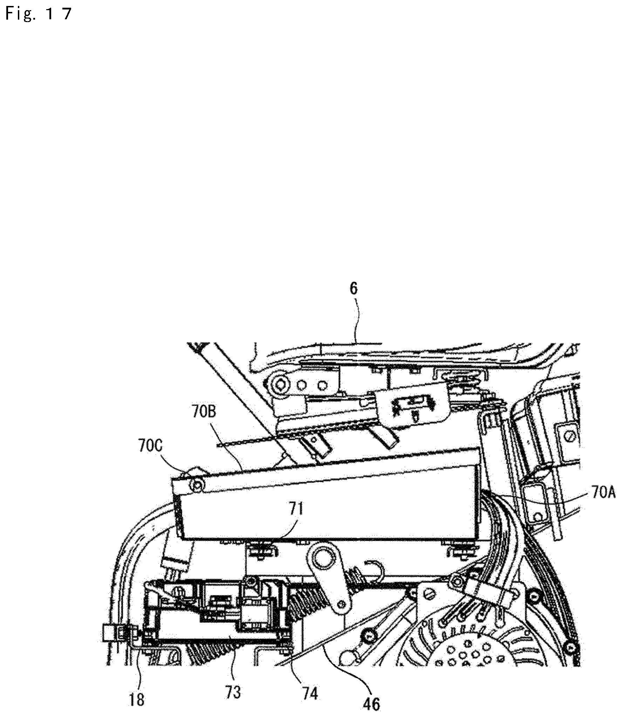

As shown in FIGS. 16 and 17, the electrical component 61 includes an electrical box 70 provided with the inverter device 81 and the like to which high-voltage electric power is supplied, and a charger 73 provided below the electrical box 70 and used to charge the battery 50. In a side view, a front portion of the electrical box 70 is provided in front of a front portion of the operator's seat 60, and a front portion of the charger 73 is provided in front of the front portion of the electrical box 70. Accordingly, a large space is formed behind the electrical box 70 and the charger 73, and the upper wall of the chute 46 is provided in the space, the upper wall being formed to be inclined upward to the rear, so that the vertical cross-sectional area in the left-right direction of the chute 46 can be formed to be large, and clogging of mowed grass inside the chute 46 can be suppressed.

The electrical box 70 includes a body portion 70A that houses the inverter device 81 and the like, and a lid portion 70B. The lid portion 70B is oscillatably supported by a support shaft 70C extending in the left-right direction and provided in a front portion of the body portion 70A. In addition, in a side view, an upper surface of the lid portion 70B is formed to be inclined upward to the rear. Accordingly, rainwater can be prevented from accumulating on the upper surface of the lid portion 70B.

The body portion 70A is mounted on support members 16A via grommets 71 provided at four corners of a lower surface of the body portion 70A, the support members 16A extending in the front-rear direction and provided on both sides of a left-right frame 16 extending in the left-right direction on a rear portion of the traveling vehicle main body 10. Accordingly, the transmission of vibrations of the traveling vehicle main body 10 to the inverter device 81 and the like is suppressed, the vibrations being generated during traveling of the work vehicle, so that damage or the like to the inverter device 81 and the like can be prevented.

The charger 73 is mounted on a support member 18 via grommets 74 provided at four corners of a lower surface of the charger 73, the support member 18 extending in the left-right direction with a predetermined length in the front-rear direction and provided on a left-right frame 17 provided in front of the left-right frame 16 of the traveling vehicle main body 10. Accordingly, the transmission of vibrations of the traveling vehicle main body 10 to the charger 73 is suppressed, the vibrations being generated during traveling of the work vehicle, so that damage or the like to the charger 73 can be prevented.

An intermediate portion in the front-rear direction of the support member 18 is formed to protrude downward from a front portion and a rear portion of the support member 18, ventilation holes 18A for ventilating outside air is formed in the intermediate portion, and a fan 75 that forcibly ventilates outside air is provided on an upper surface of the charger 73. Accordingly, the charger 73 is prevented from becoming excessively hot during use of the charger 73, so that damage to electrical components forming the charger 73 can be prevented.

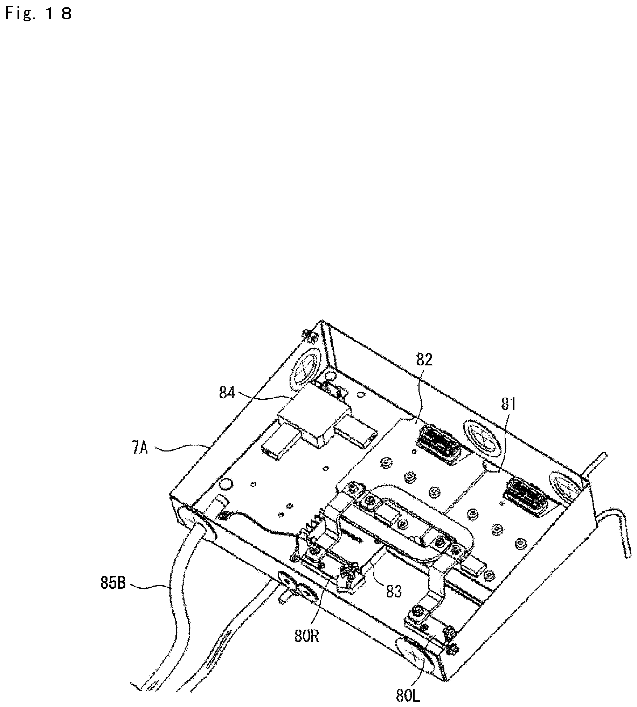

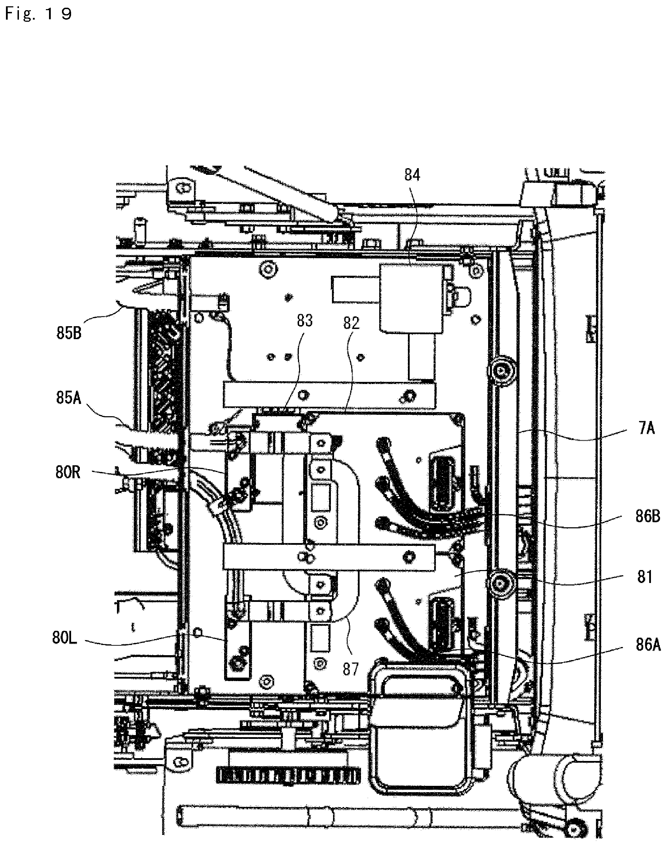

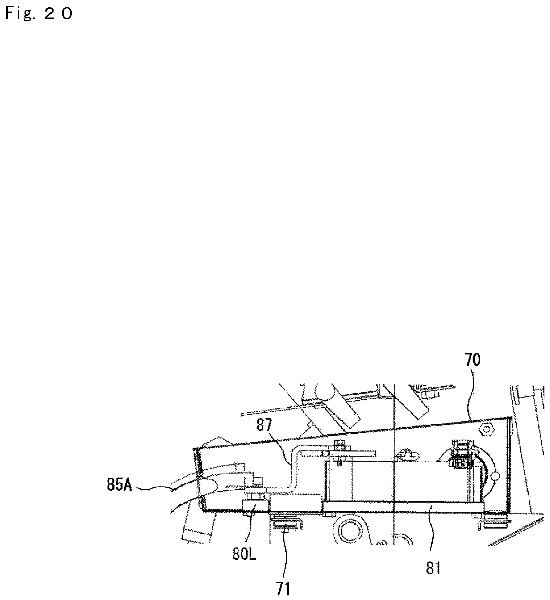

As shown in FIGS. 18 to 21, a left terminal block 80L and a right terminal block 80R are provided on a left front portion of a lower wall of the body portion 70A, the inverter device 81 that generates a 3-way AC voltage waveform to operate the electric motor 30 and the inverter device 82 that generates a 3-way AC voltage waveform to operate the electric motor 40 are provided on a left rear portion of the lower wall of the body portion 70A, and a converter device 83, which converts a DC voltage of 45V supplied from the battery 50 into a DC voltage of 12V to be supplied when the battery 55 is charged, is provided between the right terminal block 80R and the inverter device 82. Accordingly, the heated inverter device 81 and the like can be efficiently cooled by the lower wall of the body portion 70A cooled by outside air. Incidentally, in this specification, the left terminal block 80L and the right terminal block 80R are collectively referred to as a terminal block 80.

A data transfer device 84 such as an isolated CAN transceiver, which performs data transfer between the controller 77 and the inverter device 81 and the like, is provided on a right side of the inverter device 82 on the lower wall of the body portion 70A. Accordingly, noise such as electromagnetic waves generated by the inverter device 81 and the like can be blocked to increase reliability of data transfer. In addition, electrical signal communication can be performed between the controller 77 driven by the 12V battery 55 and the inverter device 81 and the like driven by the 45V battery 50, via the data transfer device 84.

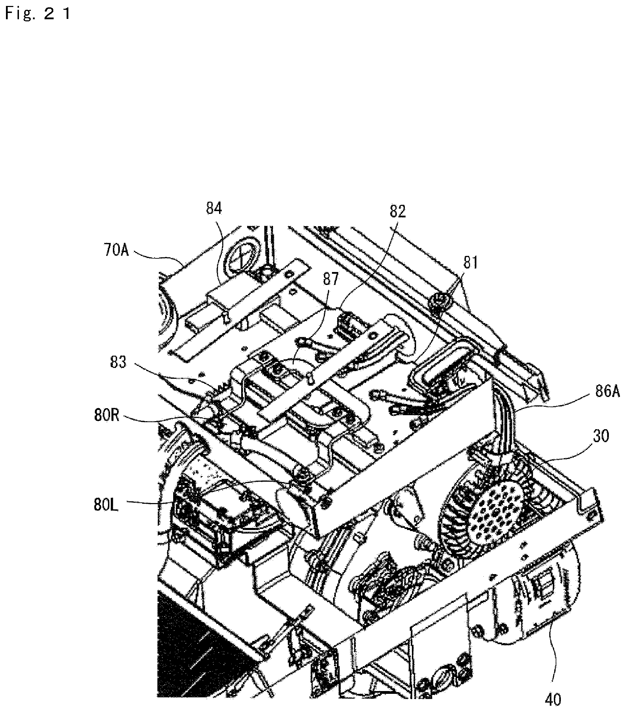

A cable 85A connecting the battery 50 and the terminal block 80 or a cable 85B connecting the controller 77 and the data transfer device 84 are inserted and routed through an inner peripheral portion of a grommet provided in an opening portion of a front wall of the electrical box 70, and a cable 86A connecting the electric motor 30 and the inverter device 81 or a cable 86B connecting the electric motor 40 and the inverter device 82 is inserted and routed through an inner peripheral portion of a grommet provided in an opening portion of a rear wall of the electrical box 70. Accordingly, the sealing performance of the electrical box 70 is increased, so that rainwater or dust can be prevented from entering the electrical box 70. In addition, as shown in FIG. 21, the electric motors 30 and 40 are provided below the inverter devices 81 and 82 provided on the left rear portion of the body portion 70A. Accordingly, the lengths of the cables 86A and 86B can be shortened, and the routing of the cables 86A and 86B can also be easily performed.

Connection between the inverter device 81 and each of the left terminal block 80L and the right terminal block 80R, connection between the inverter device 82 and each of the left terminal block 80L and the right terminal block 80R, and connection between the inverter device 81 and the inverter device 82 is performed by metal plate-shape bus bars 87. Accordingly, the routing of the left terminal block 80L, the inverter device 81, and the like can be efficiently performed.

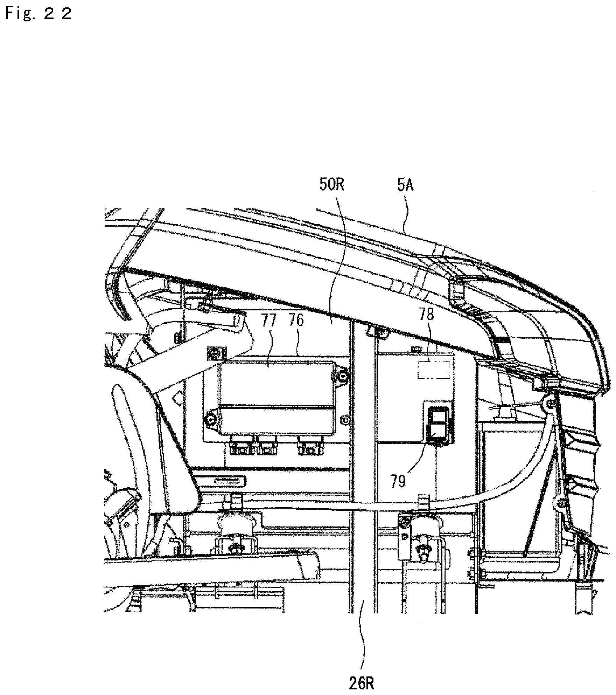

As shown in FIG. 22, a support member 76 having a rectangular shape and extending in the front-rear direction is provided on the right up-down frame 26R of the up-down protective frame 26 provided in the bonnet portion 5. The controller 77 for a work vehicle is provided on a rear portion of a right surface of the support member 76, and a relay 78 and a fuse 79 are provided on a front portion. Incidentally, the controller 77, the relay 78, and the fuse 79 are supplied with an electric power of 12V DC voltage from the battery 55. Accordingly, the controller 77 is provided at a distance from the inverter devices 81 and 82, so that the controller 77 can be prevented from malfunctioning due to noise such as electromagnetic waves generated by the inverter devices 81 and 82.

Other features according to the present embodiment are described as follows.

Left support members (12L, 13L) are provided on a left portion of the traveling vehicle body 1 at a predetermined interval in a front-rear direction, right support members (12R, 13R) are provided on a right portion of the traveling vehicle body 1 at a predetermined interval in a front-rear direction, left anti-vibration members 53L are provided on a left front-rear frame 52L of a bracket 52 at a predetermined interval in the front-rear direction, and right anti-vibration members 53R are provided on a right front-rear frame 52R of the bracket 52 at a predetermined interval in the front-rear direction. Further, in a front view, connecting portions of the left support members (12L, 13L) and a connecting portion of the left front-rear frame 52L are formed to be inclined upward to the left, and connecting portions of the right support members (12R, 13R) and a connecting portion of the right front-rear frame 52R are formed to be inclined upward to the right, so that damage to the first battery 50 and the second battery 55 caused by large vibrations in a left-right direction of the traveling vehicle body 1 during traveling can be suppressed.

In a front view, inclined surfaces of the connecting portions of the left support members (12L, 13L) and of the connecting portion of the left front-rear frame 52L are formed orthogonal to a first imaginary line 54L connecting a center between the left anti-vibration members 53L and a center of the left front wheel 2L of front wheels 2, and inclined surfaces of the connecting portions of the right support members (12R, 13R) and of the connecting portion of the right front-rear frame 52R are formed orthogonal to the second imaginary line 54R passing through a center between the right anti-vibration members 53R and through a center of the right front wheel 2R of the front wheels 2, so that large vibrations caused by irregularities of a traveling surface via the left front wheel 2L and the right front wheel 2R is suppressed. Therefore, damage to the first battery 50 and the second battery 55 can be further suppressed.

The traveling vehicle body 1 is formed of the traveling vehicle main body 10 extending in the front-rear direction, and the steering post 11 extending in an up-down direction and supporting the steering shaft 63 of the operation portion 6, the up-down protective frame 26 having an inverted U shape is provided along an outer peripheral portion of the first battery 50, the safety frame 7 having an inverted U shape is provided on a rear side of the operator's seat 60, the front-rear protective frame 27 extending rearward is provided on an intermediate portion in the up-down direction of the up-down protective frame 26, and a rear portion of the front-rear protective frame 27 is connected to the steering post 11, so that the rigidity of the up-down protective frame 26 and the front-rear protective frame 27 can be increased, and deformation in the event of overturning or the like can be suppressed.

Cushioning members 15 are provided on a lower portion of the steering post 11 at a predetermined interval in the left-right direction, and tip portions of the cushioning members 15 are each pressed against rear surfaces of the first left battery 50L and the first right battery 50R of the first battery 50, so that the first left battery 50L and the first right battery 50R of the first battery 50 are prevented from moving rearward during sudden launch of the work vehicle. Therefore, damage to surrounding members caused by the collision of the first left battery 50L and the first right battery 50R therewith can be suppressed.

## Claims

1. A riding lawn mower comprising:
a work machine (4) provided at a lower portion of a traveling vehicle body (1) to mow grass;
an operation portion (6) which is provided on the traveling vehicle body (1) and on which an operator gets;
a chute (46) through which the grass mowed by the work machine (4) passes;
a grass collection container (8) that stores the grass passing through the chute (46);
an electric motor (30) that drives wheels;
an inverter device (81, 82) that controls the electric motor (30);
an electrical box (70) that houses the inverter device (81, 82),
wherein an upper wall of the chute (46) is provided in a space behind the inverter device (81, 82) provided inside the electrical box (70), the upper wall being formed to be inclined upward to a rear,
**characterized in that**
a controller (77) that controls an electronic device installed on the traveling vehicle body (1) is provided inside a bonnet portion (5) of the traveling vehicle body (1),
a first battery (50) that supplies high-voltage electric power to the inverter device (81, 82), and a second battery (55) that supplies low-voltage electric power to the controller (77) are provided in the bonnet portion (5), and
a bracket (52) supporting the first battery (50) from a side is connected to the traveling vehicle body (1) via a left anti-vibration member (53L) and a right anti-vibration member (53R), and the second battery (55) is mounted on a support member (57) provided on a front portion of the bracket (52).

2. The riding lawn mower according to claim 1,
wherein the inverter device (81, 82) provided inside the electrical box (70) is provided between the operation portion (6) and the chute (46).

3. The riding lawn mower according to claim 1 or 2, further comprising:
a charger (73) used to charge a battery (50),
wherein the electrical box (70) and the charger (73) are provided in an up-down direction, and the upper wall of the chute (46) is provided below the electrical box (70) and behind the charger (73), the upper wall being formed to be inclined upward to the rear.

4. The riding lawn mower according to claim 3,
wherein in a side view, a rear portion of the electrical box (70) is provided in front of a rear portion of an operator's seat (60), and
a rear portion of the charger (73) is provided in front of the rear portion of the electrical box (70).

## Patentansprüche

1. Aufsitzrasenmäher, der Folgendes umfasst:
eine Arbeitsmaschine (4), die an einem unteren Teil eines Fahrzeugkörpers (1) vorgesehen ist, um Gras zu mähen;
einen Bedienungsbereich (6), der auf dem Fahrzeugkörper (1) vorgesehen ist und auf den sich ein Bediener setzt;
einen Auswurfschacht (46), durch den das von der Arbeitsmaschine (4) gemähte Gras geführt wird;
einen Grasauffangbehälter (8), der das durch den Auswurfschacht (46) geführte Gras aufnimmt;
einen Elektromotor (30), der die Räder antreibt;
eine Wechselrichtervorrichtung (81, 82), die den Elektromotor (30) steuert;
einen Elektrokasten (70), in dem die Wechselrichtervorrichtung (81, 82) untergebracht ist,
wobei eine obere Wand des Auswurfschachts (46) in einem Raum hinter der Wechselrichtervorrichtung (81, 82) vorgesehen ist, die innerhalb des Elektrokastens (70) vorgesehen ist, wobei die obere Wand ausgebildet ist, um rückwärts nach oben geneigt zu sein,
**dadurch gekennzeichnet, dass**
eine Steuervorrichtung (77), die ein an dem Fahrzeugkörper (1) angebrachtes elektronisches Gerät steuert, innerhalb eines Motorhaubenteils (5) des Fahrzeugkörpers (1) vorgesehen ist,
eine erste Batterie (50), die die Wechselrichtervorrichtung (81, 82) mit Hochspannungsstrom versorgt, und eine zweite Batterie (55), die die Steuervorrichtung (77) mit Niederspannungsstrom versorgt, im Motorhaubenteil (5) vorgesehen sind, und
eine Halterung (52), die die erste Batterie (50) von einer Seite her stützt, über ein linkes Schwingungsdämpfungselement (53L) und ein rechtes Schwingungsdämpfungselement (53R) mit dem Fahrzeugkörper (1) verbunden ist, und die zweite Batterie (55) auf einem Stützelement (57) montiert ist, das an einem vorderen Teil der Halterung (52) vorgesehen ist.

2. Aufsitzrasenmäher gemäß Anspruch 1,
wobei die innerhalb des Elektrokastens (70) vorgesehene Wechselrichtervorrichtung (81, 82) zwischen dem Bedienungsabschnitt (6) und dem Auswurfschacht (46) vorgesehen ist.

3. Aufsitzrasenmäher gemäß Anspruch 1 oder 2, der ferner Folgendes umfasst:
ein Ladegerät (73) zum Laden einer Batterie (50),
wobei der Elektrokasten (70) und das Ladegerät (73) in einer Auf-AbRichtung vorgesehen sind und die obere Wand des Auswurfschachts (46) unterhalb des Elektrokastens (70) und hinter dem Ladegerät (73) vorgesehen ist, wobei die obere Wand ausgebildet ist, um rückwärts nach oben geneigt zu sein.

4. Aufsitzrasenmäher gemäß Anspruch 3,
wobei in einer Seitenansicht ein hinterer Teil des Elektrokastens (70) vor einem hinteren Teil eines Fahrersitzes (60) vorgesehen ist und
ein hinterer Teil des Ladegeräts (73) vor dem hinteren Teil des Elektrokastens (70) vorgesehen ist.

## Revendications

1. Tondeuse à gazon autoportée comprenant :
une machine de travail (4) prévue dans une partie inférieure d'un corps de véhicule de déplacement (1) pour tondre l'herbe ;
une partie de commande (6) qui est prévue sur le corps de véhicule de déplacement (1) et sur laquelle monte un opérateur ;
une chute (46) à travers laquelle passe l'herbe tondue par la machine de travail (4) ;
un bac de ramassage d'herbe (8) qui stocke l'herbe passant à travers la chute (46) ;
un moteur électrique (30) qui entraîne les roues ;
un dispositif inverseur (81, 82) qui commande le moteur électrique (30) ;
un boîtier électrique (70) pour loger le dispositif inverseur (81, 82),
dans laquelle une paroi supérieure de la chute (46) est prévue dans un espace situé derrière le dispositif inverseur (81, 82) prévu à l'intérieur du boîtier électrique (70), la paroi supérieure étant formée de manière à être inclinée vers le haut vers un arrière,
**caractérisé en ce que**
un contrôleur (77) qui commande un dispositif électronique installé sur le corps de véhicule de déplacement (1) est prévu à l'intérieur d'une partie du capot (5) du corps de véhicule de déplacement (1),
une première batterie (50) qui fournit une alimentation électrique haute tension au dispositif inverseur (81, 82) et une deuxième batterie (55) qui fournit une alimentation électrique basse tension au contrôleur (77) sont prévues dans la partie du capot (5), et
un support (52) soutenant la première batterie (50) par un côté est relié au corps de véhicule de déplacement (1) via un élément anti-vibration gauche (53L) et un élément anti-vibration droit (53R), et la deuxième batterie (55) est montée sur un élément de support (57) prévu sur une partie avant du support (52).

2. Tondeuse à gazon autoportée selon la revendication 1,
dans laquelle le dispositif inverseur (81, 82) prévu à l'intérieur du boîtier électrique (70) est prévu entre la partie de commande (6) et la chute (46).

3. Tondeuse à gazon autoportée selon la revendication 1 ou 2, comprenant en outre :
un chargeur (73) utilisé pour charger une batterie (50),
dans laquelle le boîtier électrique (70) et le chargeur (73) sont prévus dans une direction haut et bas, et la paroi supérieure de la chute (46) est prévue sous le boîtier électrique (70) et derrière le chargeur (73), la paroi supérieure étant formée de manière à être inclinée vers le haut et vers l'arrière.

4. Tondeuse à gazon autoportée selon la revendication 3,
dans laquelle, dans une vue latérale, une partie arrière du boîtier électrique (70) est prévue devant une partie arrière d'un siège de l'opérateur (60), et
une partie arrière du chargeur (73) est prévue devant la partie arrière du boîtier électrique (70).
